# EUROPÄISCHE PATENTSCHRIFT

(11) **EP 3 058 257 B1**
(45) Veröffentlichungstag und Bekanntmachung des Hinweises auf die Patenterteilung: **21.02.2018**
(21) Anmeldenummer: 14755387.9
(22) Anmeldetag: 26.08.2014
(51) Int. Cl.: F16K 11/07, F16K 27/04

(54) **SCHIEBERVENTIL, INSBESONDERE FÜR EIN AUTOMATIKGETRIEBE EINES KRAFTFAHRZEUGS**
SPOOL VALVE, IN PARTICULAR FOR AN AUTOMATIC TRANSMISSION OF A MOTOR VEHICLE
DISTRIBUTEUR À TIROIR, EN PARTICULIER POUR BOÎTE DE VITESSES AUTOMATIQUE DE VÉHICULE AUTOMOBILE

(30) Priorität: 18.10.2013 DE 102013221218
(43) Veröffentlichungstag der Anmeldung: 24.08.2016
(73) Patentinhaber: Robert Bosch GmbH, 70442 Stuttgart (DE)
(72) Erfinder: ESZTERLE, Marcel, 71282 Hemmingen (DE); SCHUDT, Klaus, 74226 Nordheim (DE)
(86) Internationale Anmeldenummer: PCT/EP2014/068038
(87) Internationale Veröffentlichungsnummer: WO 2015/055340

(56) Entgegenhaltungen:
- DE-A1- 3 224 119
- DE-B4- 19 847 021
- DE-U1- 20 100 950
- US-A1- 2012 326 062

## Beschreibung

### Stand der Technik

Die Erfindung betrifft ein Schieberventil nach dem Oberbegriff des Anspruchs 1.

Vom Markt her bekannt sind Automatikgetriebe für Kraftfahrzeuge, bei welchen zum Wechseln der Gänge hydraulisch betätigbare Kupplungen verwendet werden. Damit Schaltvorgänge ruckfrei und für den Fahrer unmerklich ablaufen, ist eine vergleichsweise hohe Präzision der hydraulischen Komponenten erforderlich. Beispielsweise werden dafür elektromagnetisch betätigbare Druckregelventile verwendet. Patentveröffentlichungen aus diesem Fachgebiet sind beispielsweise die DE 198 47 021 B4 und die DE 201 00 950 U1, ebenso die DE 32 24 119 A1 und die US 2012/0326062 A1.

### Offenbarung der Erfindung

Das der Erfindung zugrunde liegende Problem wird durch ein Schieberventil nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung betrifft ein Schieberventil, welches insbesondere als Druckregelventil für ein Automatikgetriebe eines Kraftfahrzeugs verwendet werden kann, mit einem Gehäuse und mit einem in einer Führungsausnehmung des Gehäuses angeordneten axial bewegbaren Ventilschieber. Dabei umfasst das Gehäuse mindestens einen radialen Zulaufanschluss und einen von diesem axial beabstandeten radialen Ablaufanschluss und einen stirnseitigen Arbeitsanschluss, wobei an der Führungsausnehmung mindestens eine mit dem Zulaufanschluss verbundene erste Steueröffnung und eine von dieser axial beabstandete und mit dem Ablaufanschluss verbundene zweite Steueröffnung und eine axial zwischen diesen beiden angeordnete und mit dem Arbeitsanschluss verbundene dritte Steueröffnung vorhanden ist, wobei die ersten und zweiten Steueröffnungen mit einem ersten und einem zweiten Steuerabschnitt an dem Ventilschieber hydraulisch kooperieren können, und wobei in dem Gehäuse ein bereichsweise axial verlaufender Verbindungskanal vorhanden ist, der die dritte Steueröffnung mit dem Arbeitsanschluss verbindet. Erfindungsgemäß weist das Gehäuse einen aus Kunststoff hergestellten Abschnitt auf, in dem der Verbindungskanal ausgebildet ist.

Dadurch kann das Schieberventil besonders kostengünstig hergestellt werden, wobei ein vergleichsweise großer hydraulischer Querschnitt in der Verbindung zu dem stirnseitigen Arbeitsanschluss ermöglicht wird. Insbesondere sind eine externe hydraulische Verbindung zu dem Arbeitsanschluss und ein dazu erforderlicher zusätzlicher Hydraulikanschluss an dem Gehäuse des Schieberventils entbehrlich. Ebenso ist es nicht erforderlich, dass der Ventilschieber einen axialen und/oder radialen Kanal aufweist, welcher beispielsweise mittels einer zentrischen bzw. radialen Bohrung auszuführen wäre. Das erfindungsgemäße Schieberventil ermöglicht also vergleichsweise große hydraulische Durchflüsse und somit ein gutes dynamisches Verhalten.

Gemäß der Erfindung umfasst das Gehäuse eine vorzugsweise aus Metall hergestellte Schieberhülse, in der die Führungsausnehmung und die Steueröffnungen ausgebildet sind und die mit Kunststoff umspritzt ist, wodurch der aus Kunststoff hergestellte Abschnitt gebildet wird. Dadurch kann das Schieberventil besonders einfach und dennoch robust hergestellt und ein Gewicht des Schieberventils reduziert werden. Ein zur Herstellung der Schieberhülse erforderliches Zerspanungsvolumen ist vergleichsweise klein, wodurch Kosten gesenkt werden. Inneneinstiche und/oder gefräste Kanäle an einem Außendurchmesser der Schieberhülse sind entbehrlich. Kunststoffspritzteile sind ferner in der Herstellung besonders preiswert.

Weiterhin kann vorgesehen sein, dass das Gehäuse ein radial äußeres Mantelteil umfasst, welches auf den aus Kunststoff hergestellten Abschnitt aufgepresst ist und an dem der Zulaufanschluss, der Ablaufanschluss und der Arbeitsanschluss ausgebildet sind. Mittels des Aufpressens kann eine Montage des Schieberventils besonders einfach durchgeführt werden. Insbesondere erfolgen die jeweiligen Pressverbindungen an radial geschlossenen Ringflächen zwischen dem Gehäuse und dem äußeren Mantelteil, wodurch eine große hydraulische Dichtheit ermöglicht wird. Das Mantelteil ist ferner einfach und ohne spezielle Winkelorientierung montierbar.

Ergänzend kann vorgesehen sein, dass das Mantelteil mindestens ein einem Anschluss zugeordnetes Filtersieb umfasst. Beispielsweise ist das Filtersieb stirnseitig an dem Mantelteil ausgebildet und somit dem Arbeitsanschluss zugeordnet. Dadurch ist ein externes hydraulisches Filter gegebenenfalls entbehrlich, wodurch Kosten gespart werden können. Das Mantelteil kann ebenfalls ein Spritzgussteil sein, in welches die Filter beim Spritzguss eingearbeitet werden.

In einer weiteren Ausgestaltung des Schieberventils weist der Ventilschieber in einem jeweiligen Bereich des ersten und zweiten schieberseitigen Steuerabschnitts einen im Wesentlichen gleichen Durchmesser auf und ist somit im Wesentlichen ohne Durchmesserstufen ausgeführt. Dadurch kann die Herstellung des Ventilschiebers und ebenso der Schieberhülse vereinfacht und verbilligt werden.

Weiterhin kann vorgesehen sein, dass der Verbindungskanal mindestens zwei axial verlaufende Teil-Kanäle umfasst, welche in einem radialen Winkel von 90 Grad in Bezug auf mindestens einen der radialen Anschlüsse des Schieberventils angeordnet sind. Die Teil-Kanäle sind mittels Ausnehmungen und/oder Hohlräumen an dem aus Kunststoff hergestellten Abschnitt ausgebildet. Dadurch wird ein vergleichsweise großer hydraulischer Querschnitt des Verbindungskanals ermöglicht, und der Betrieb des Schieberventils somit verbessert. Beispielsweise weisen die axialen Teil-Kanäle zumindest abschnittsweise einen in etwa kreissegmentförmigen oder sichelförmigen Querschnitt auf. Dadurch ergibt sich eine für das erfindungsgemäße Schieberventil besonders geeignete Querschnittsform für den bereichsweise axial verlaufenden Verbindungskanal.

Der Betrieb des Schieberventils kann besonders einfach und präzise erfolgen, wenn es elektromagnetisch betätigbar ist, wobei der Ventilschieber einerseits von einer axial wirkenden Druckfeder und andererseits durch elektromagnetische Kraft axial beaufschlagbar ist. Ein jeweiliges Kräftegleichgewicht zwischen der Federkraft und der elektromagnetischen Kraft - unter Berücksichtigung eventueller hydraulischer Kräfte - bestimmt somit eine axiale Position des Ventilschiebers in der Schieberhülse.

Nachfolgend werden beispielhafte Ausführungsformen der Erfindung unter Bezugnahme auf die Zeichnung erläutert. In der Zeichnung zeigen:
- Figur 1: eine erste axiale Schnittansicht eines Schieberventils für ein Automatikgetriebe eines Kraftfahrzeugs;
- Figur 2: eine zweite axiale Schnittansicht des Schieberventils von Figur 1;
- Figur 3: eine perspektivische Darstellung eines radialen Schnitts durch das Schieberventil entlang einer Linie III-III von Figur 2;
- Figur 4: eine erste perspektivische Darstellung des Schieberventils; und
- Figur 5: eine zweite perspektivische Darstellung des Schieberventils.

Es werden für funktionsäquivalente Elemente und Größen in allen Figuren auch bei unterschiedlichen Ausführungsformen die gleichen Bezugszeichen verwendet.

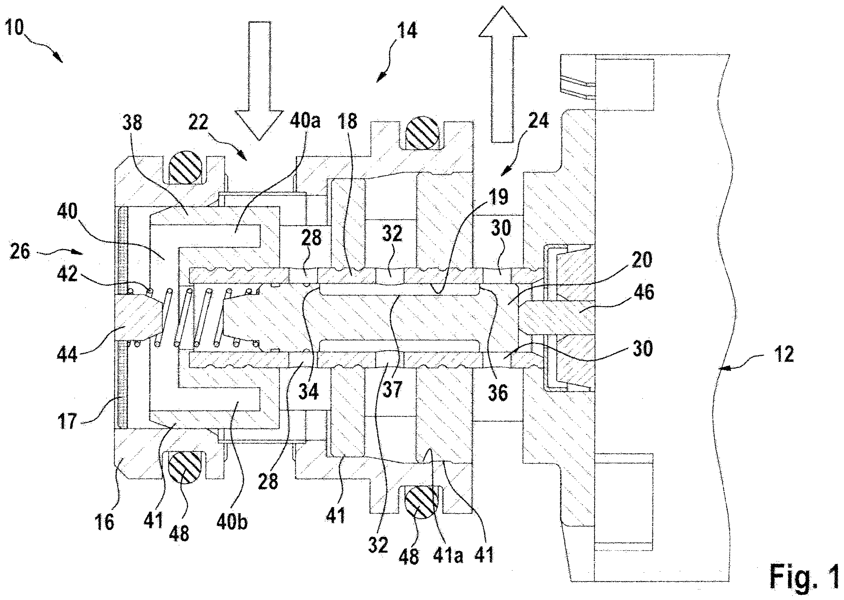

Figur 1 zeigt ein Schieberventil 10 für ein nicht gezeigtes Automatikgetriebe eines Kraftfahrzeugs in einer axialen Schnittansicht. In einem in der Figur 1 rechten Bereich ist ein das Schieberventil 10 betätigender elektromagnetischer Aktor 12 in einer Außenansicht teilweise mit dargestellt.

Das Schieberventil 10 umfasst ein Gehäuse 14 mit einem in etwa hutförmig ausgebildeten radial äußeren Mantelteil 16, bei dem es sich um ein Kunststoff-Spritzgussteil handelt. An dem äußeren Mantelteil 16 ist stirnseitig (also in der Figur 1 links) ein Filtersieb 17 angeordnet. Das Filtersieb 17 ist in das Mantelteil 16 eingespritzt. Weiterhin umfasst das Gehäuse 14 eine im Wesentlichen zylindrisch ausgebildete Schieberhülse 18, an welcher radial innen eine sich annähernd über die gesamte axiale Länge der Schieberhülse 18 erstreckende Führungsausnehmung 19 ausgebildet ist. In der Führungsausnehmung 19 ist ein Ventilschieber 20 axial bewegbar und im Wesentlichen fluiddicht geführt.

Weiterhin umfasst das Gehäuse 14 einen radialen Zulaufanschluss 22 und einen von diesem axial beabstandeten radialen Ablaufanschluss 24, sowie einen stirnseitigen Arbeitsanschluss 26, welcher in der Figur 1 links an dem Schieberventil 10 angeordnet ist. Insbesondere sind der Zulaufanschluss 22, der Ablaufanschluss 24 und der Arbeitsanschluss 26 an dem radial äußeren Mantelteil 16 ausgebildet. Zwei Pfeile (ohne Bezugszeichen) kennzeichnen eine mögliche Strömungsrichtung an dem Zulaufanschluss 22 bzw. an dem Ablaufanschluss 24.

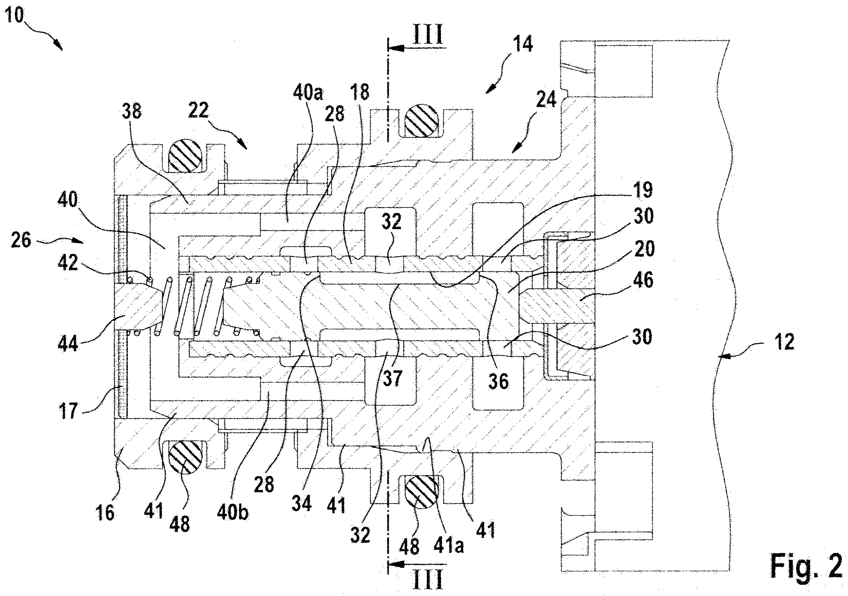

An der Schieberhülse 18 bzw. an der Führungsausnehmung 19 sind in Umfangsrichtung gleichmäßig verteilt vier mit dem Zulaufanschluss 22 verbundene erste Steueröffnungen 28, und vier von diesen axial beabstandete und mit dem Ablaufanschluss 24 verbundene zweite Steueröffnungen 30, und vier axial zwischen den ersten und zweiten Steueröffnungen 28 und 30 angeordnete und mit dem Arbeitsanschluss 26 verbundene dritte Steueröffnungen 32 vorhanden. Wegen der vorliegenden Schnittansicht sind in der Figur 1 nur jeweils zwei der Steueröffnungen 28 bzw. 30 bzw. 32 sichtbar. Die übrigen jeweils zwei Steueröffnungen 28 bzw. 30 bzw. 32 sind in der weiter unten beschriebenen Figur 2 sichtbar. Die jeweiligen vier Steueröffnungen 28 bzw. 30 bzw. 32 sind radial zueinander in einem Winkel von 90 Grad angeordnet.

Die ersten und zweiten Steueröffnungen 28 und 30 können jeweils mit einem ersten und einem zweiten jeweils eine umlaufende Steuerkante umfassenden schieberseitigen Steuerabschnitt 34 und 36 an dem Ventilschieber 20 hydraulisch kooperieren. Insbesondere weist der Ventilschieber 20 in einem jeweiligen Bereich des ersten und zweiten schieberseitigen Steuerabschnitts 34 und 36 einen im Wesentlichen gleichen Durchmesser auf. Zwischen den Steuerabschnitten 34 und 36 weist der Ventilschieber 20 eine sich axial erstreckende radial umlaufende Ausnehmung 37 auf. Weiterhin umfasst das Gehäuse 14 einen radial zwischen der Schieberhülse 18 und dem äußeren Mantelteil 16 angeordneten radial mittleren Abschnitt 38. Das äußere Mantelteil 16, der radial mittlere Abschnitt 38, die vorzugsweise aus Metall hergestellte Schieberhülse 18 sowie der Ventilschieber 20 sind jeweils zumindest teilweise rotationsymmetrisch ausgeführt.

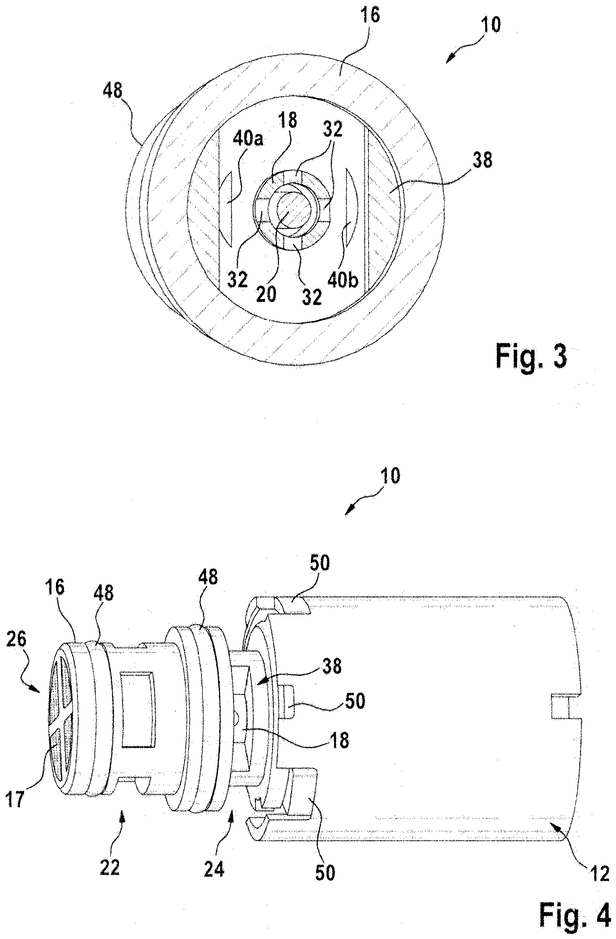

In dem radial mittleren Abschnitt 38 ist ein Verbindungskanal 40 ausgebildet, welcher bereichsweise axial verläuft und die dritten Steueröffnungen 32 mit dem Arbeitsanschluss 26 hydraulisch verbindet. Der Verbindungskanal 40 umfasst einen ersten und einen zweiten axialen Teil-Kanal 40a und 40b, welche radial um 180 Grad zueinander versetzt angeordnet sind, wie weiter unten bei den Figuren 2 und 3 noch gezeigt werden wird. Ebenso sind die Teil-Kanäle 40a und 40b in einem radialen Winkel von 90 Grad in Bezug auf die radialen Anschlüsse 22 bzw. 24 des Schieberventils 10 angeordnet.

Vorliegend ist der radial mittlere Abschnitt 38 aus einem Kunststoff hergestellt, indem die (meist metallische) Schieberhülse 18 von dem Kunststoff umspritzt ist. Dazu weist die Schieberhülse 18 eine Mehrzahl von axial verteilt angeordneten radial umlaufenden äußeren Nuten bzw. Rippen (ohne Bezugszeichen) auf, so dass beide Elemente sozusagen ineinander verzahnt sind und eine Einheit bilden. Der radial mittlere Abschnitt 38 ist vorliegend an drei axial beabstandeten radial äußeren Abschnitten 41 gegen entsprechende radial innere Abschnitte des äußeren Mantelteils 16 verpresst, wodurch beide Elemente kraftschlüssig miteinander verbunden sind. Die radial äußeren Abschnitte 41 können - wie vorliegend - zumindest einen radial umlaufenden Steg 41a aufweisen, wodurch die Verpressung gegen das radial äußere Mantelteil 16 verbessert und somit auch die Dichtheit erhöht wird.

An einem zapfenförmig ausgebildeten in der Zeichnung linken Endabschnitt (ohne Bezugszeichen) des Ventilschiebers 20 greift eine als Schraubenfeder ausgeführte Druckfeder 42 an. Ein axial entgegengesetzter Abschnitt der Druckfeder 42 ist an einem ebenfalls zapfenförmig ausgebildeten zentrischen Abschnitt 44 des äußeren Mantelteils 16 gehalten. Somit kann die Druckfeder 42 den Ventilschieber 20 in der Zeichnung nach rechts mit einer Druckkraft beaufschlagen. Diese Druckkraft wirkt gemeinsam mit der Hydraulikkraft, die durch Beaufschlagung der in der Zeichnung linken Stirnfläche mit dem dort anliegenden Druck im Arbeitsanschluss 26 entsteht. Eine in der Zeichnung rechte Stirnfläche des Ventilschiebers 20 wird von einem Betätigungsstift 46 des elektromagnetischen Aktors 12 beaufschlagt.

Weiterhin umfasst das Schieberventil 10 zwei in radial umlaufenden äußeren Nuten des äußeren Mantelteils 16 angeordnete ringförmige O-Ring-Dichtungen 48, welche im eingebauten Zustand des Schieberventils 10 den Ablaufanschluss 24 gegen den Zulaufanschluss 22 und den Zulaufanschluss 22 gegen den Arbeitsanschluss 26 hydraulisch dichten können.

Bei der Herstellung des Schieberventils 10 können die radialen Steueröffnungen 28, 30 und 32 der Schieberhülse 18 in einem Spritzwerkzeug mittels Werkzeugbacken freigehalten werden. Zwischen den Steueröffnungen 28 und 32 bzw. 32 und 30 bildet der Kunststoff ringförmige Bereiche, welche als Dichtstellen zur Abdichtung des Zulaufanschlusses 22 gegen den Arbeitsanschluss 26 bzw. des Arbeitsanschlusses 26 gegen den Ablaufanschluss 24 verwendet werden. Weitere Dichtstellen ergeben sich - wie oben bereits beschrieben - mittels der Pressverbindungen zwischen dem radial mittleren Abschnitt 38 und dem radial äußeren Mantelteil 16.

In der Figur 1 ist der Ventilschieber 20 derart positioniert, dass die ersten Steueröffnungen 28 des Zulaufanschlusses 22 mittels des zweiten Steuerabschnitts 34, und die zweiten Steueröffnungen 30 des Ablaufanschlusses 24 mittels des zweiten Steuerabschnitts 36 verschlossen sind. Die dritten Steueröffnungen 32, welche mit dem Arbeitsanschluss 26 hydraulisch verbunden sind, sind zwar mit einem durch die radiale Ausnehmung 37 an dem Ventilschieber 20 gebildeten Fluidraum verbunden, weisen jedoch entsprechend der in der Figur 1 dargestellten Position des Ventilschiebers 20 keine hydraulische Verbindung zu dem Zulaufanschluss 22 oder dem Ablaufanschluss 24 auf.

Im Betrieb des Schieberventils 10 der Figur 1 kann der Ventilschieber 20 in Abhängigkeit von einer Betätigungskraft des elektromagnetischen Aktors 12 und in Abhängigkeit von einer Kraft der Druckfeder 42 im Prinzip stufenlos in der Führungsausnehmung 19 der Schieberhülse 18 axial bewegt werden. In einer ersten Position des Ventilschiebers 20 (wobei der Ventilschieber 20 in Bezug auf die Darstellung der Figur 1 nach links bewegt ist) sind der Zulaufanschluss 22 und der Arbeitsanschluss 26 hydraulisch miteinander verbunden. Dabei ergibt sich eine hydraulische Verbindung wie folgt: Von dem Zulaufanschluss 22 durch die ersten Steueröffnungen 28, danach durch die radiale Ausnehmung 37 an dem Ventilschieber 20, danach durch die dritten Steueröffnungen 32, danach durch die beiden Teil-Kanäle 40a und 40b, danach durch das Filtersieb 17, und hin zu dem Arbeitsanschluss 26.

In einer zweiten Position des Ventilschiebers 20 (wie in der Figur 1 gezeichnet und oben bereits beschrieben) ist der Arbeitsanschluss 26 von dem Zulaufanschluss 22 und dem Ablaufanschluss 24 hydraulisch getrennt. In einer dritten Position des Ventilschiebers 20 (wobei der Ventilschieber 20 in Bezug auf die Darstellung der Figur 1 nach rechts bewegt ist) sind der Ablaufanschluss 24 und der Arbeitsanschluss 26 hydraulisch miteinander verbunden. Dabei ergibt sich eine hydraulische Verbindung wie folgt: Von dem Arbeitsanschluss 26 durch das Filtersieb 17, danach durch die Teil-Kanäle 40a und 40b, danach durch die dritten Steueröffnungen 32, danach durch die radiale Ausnehmung 37 an dem Ventilschieber 20, danach durch die zweiten Steueröffnungen 30, und hin zu dem Ablaufanschluss 24.

Figur 2 zeigt das Schieberventil 10 in einer zweiten axialen Schnittansicht, welche in Bezug auf die erste axiale Schnittansicht von Figur 1 radial um 90 Grad gedreht ist. Insbesondere ist ein bereichsweiser axialer Verlauf der beiden Teil-Kanäle 40a und 40b des Verbindungskanals 40 zu erkennen. Der Ventilschieber 20 ist in einer zu der Figur 1 gleichen axialen Position angeordnet.

Figur 3 zeigt eine perspektivische Darstellung eines radialen Schnitts durch das Schieberventil 10 entlang einer Linie III-III von Figur 2, also mittig durch die vier radialen Steueröffnungen 32 der Schieberhülse 18. In der dargestellten Schnittebene weisen die axialen Teil-Kanäle 40a und 40b einen kreissegmentförmigen Querschnitt auf. In einer nicht dargestellten Ausführungsform des Schieberventils 10 weisen die axialen Teil-Kanäle 40a und 40b abschnittsweise einen sichelförmigen Querschnitt auf.

Figur 4 zeigt eine perspektivische Darstellung des Schieberventils 10 gemäß den Figuren 1 bis 3. Insbesondere ist in einem äußerst linken Bereich der Zeichnung das Filtersieb 17 zu erkennen, welches mittels zwei kreuzförmig angeordneter Stege (ohne Bezugszeichen) gehalten wird bzw. zwei kreuzförmig angeordnete Stege aufweist. In einem mittleren Bereich von Figur 4 ist zu erkennen, dass der radial mittlere Abschnitt 38 eine Mehrzahl von Ausformungen 50 umfasst, mittels welcher dieser an Ausnehmungen eines Gehäuses (ohne Bezugszeichen) des elektromagnetischen Aktors 12 angeordnet ist.

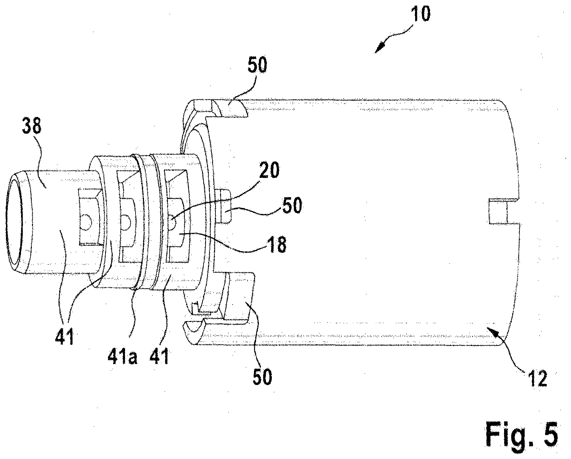

Figur 5 zeigt eine weitere perspektivische Darstellung des Schieberventils 10. Im Unterschied zu der Figur 4 wurde in der Zeichnung von Figur 5 das radial äußere Mantelteil 16 weggelassen, damit der radial mittlere Abschnitt 38 sowie die Schieberhülse 18 und der Ventilschieber 20 besser zu erkennen sind.

## Patentansprüche

1. Schieberventil (10), insbesondere für ein Automatikgetriebe eines Kraftfahrzeugs, mit einem Gehäuse (14) und mit einem in einer Führungsausnehmung (19) des Gehäuses (14) angeordneten axial bewegbaren Ventilschieber (20), wobei das Gehäuse (14) mindestens einen radialen Zulaufanschluss (22) und einen von diesem axial beabstandeten radialen Ablaufanschluss (24) und einen stirnseitigen Arbeitsanschluss (26) umfasst, wobei an der Führungsausnehmung (19) mindestens eine mit dem Zulaufanschluss (22) verbundene erste Steueröffnung (28) und eine von dieser axial beabstandete und mit dem Ablaufanschluss (24) verbundene zweite Steueröffnung (30) und eine axial zwischen diesen beiden angeordnete und mit dem Arbeitsanschluss (26) verbundene dritte Steueröffnung (32) vorhanden ist, wobei die ersten und zweiten Steueröffnungen (28, 30) mit einem ersten und einem zweiten Steuerabschnitt (34, 36) an dem Ventilschieber (20) hydraulisch kooperieren können, und wobei in dem Gehäuse (14) ein bereichsweise axial verlaufender Verbindungskanal (40) vorhanden ist, der die dritte Steueröffnung (32) mit dem Arbeitsanschluss (26) verbindet, **dadurch gekennzeichnet, dass** das Gehäuse (14) eine vorzugsweise aus Metall hergestellte Schieberhülse (18) umfasst, in der die Führungsausnehmung (19) und die Steueröffnungen (28, 30, 32) ausgebildet sind und die mit Kunststoff umspritzt ist, wodurch ein aus Kunststoff hergestellter Abschnitt (38) gebildet wird, in dem der Verbindungskanal (40) ausgebildet ist.

2. Schieberventil (10) nach Anspruch 1, **dadurch gekennzeichnet, dass** das Gehäuse (14) ein radial äußeres Mantelteil (16) umfasst, welches auf den aus Kunststoff hergestellten Abschnitt (38) aufgepresst ist und an dem der Zulaufanschluss (22), der Ablaufanschluss (24) und der Arbeitsanschluss (26) ausgebildet sind.

3. Schieberventil (10) nach Anspruch 2, **dadurch gekennzeichnet, dass** das Mantelteil (16) mindestens ein einem Anschluss (22, 24, 26) zugeordnetes Filtersieb (17) umfasst.

4. Schieberventil (10) nach wenigstens einem der vorhergehenden Ansprüche, **dadurch gekennzeichnet, dass** der Ventilschieber (20) in einem jeweiligen Bereich des ersten und zweiten schieberseitigen Steuerabschnitts (34, 36) einen im Wesentlichen gleichen Durchmesser aufweist.

5. Schieberventil (10) nach wenigstens einem der vorhergehenden Ansprüche, **dadurch gekennzeichnet, dass** der Verbindungskanal (40) mindestens zwei axial verlaufende Teil-Kanäle (40a, 40b) umfasst, welche in einem radialen Winkel von 90 Grad in Bezug auf mindestens einen der radialen Anschlüsse (22, 24) des Schieberventils (10) angeordnet sind.

6. Schieberventil (10) nach Anspruch 5, **dadurch gekennzeichnet, dass** die axialen Teil-Kanäle (40a, 40b) zumindest abschnittsweise einen in etwa kreissegmentförmigen oder sichelförmigen Querschnitt aufweisen.

7. Schieberventil (10) nach wenigstens einem der vorhergehenden Ansprüche, **dadurch gekennzeichnet, dass** es elektromagnetisch betätigbar ist, wobei der Ventilschieber (20) einerseits von einer axial wirkenden Druckfeder (42) und andererseits durch elektromagnetische Kraft axial beaufschlagbar ist.

## Claims

1. Slide valve (10), in particular for an automatic transmission of a motor vehicle, having a housing (14) and having an axially movable valve slide (20) arranged in a guide recess (19) of the housing (14), wherein the housing (14) comprises at least one radial feed port (22) and one radial discharge port (24) spaced apart axially therefrom and one face-side working port (26), wherein, at the guide recess (19), there are provided at least one first control opening (28), which is connected to the feed port (22), and one second control opening (30), which is axially spaced apart from said at least one first control opening and which is connected to the discharge port (24), and one third control opening (32), which is arranged axially between said at least one first control opening and said at least one second control opening and which is connected to the working port (26), wherein the first and second control openings (28, 30) can hydraulically cooperate with a first and a second control section (34, 36) on the valve slide (20), and wherein, in the housing (14), there is provided a connecting duct (40) which runs axially in regions and which connects the third control opening (32) to the working port (26), **characterized in that** the housing (14) comprises a slide sleeve (18) which is preferably produced from metal and in which the guide recess (19) and the control openings (28, 30, 32) are formed and which is encapsulated with plastic, whereby a section (38) produced from plastic is formed, in which the connecting duct (40) is formed.

2. Slide valve (10) according to Claim 1, **characterized in that** the housing (14) comprises a radially outer shell part (16), which is pressed onto the section (38) produced from plastic and on which the feed port (22), the discharge port (24) and the working port (26) are formed.

3. Slide valve (10) according to Claim 2, **characterized in that** the shell part (16) comprises at least one filter screen (17) assigned to a port (22, 24, 26).

4. Slide valve (10) according to at least one of the preceding claims, **characterized in that** the valve slide (20) has a substantially equal diameter in a respective region of the first and of the second control section (34, 36) on the slide.

5. Slide valve (10) according to at least one of the preceding claims, **characterized in that** the connecting duct (40) comprises at least two axially running duct parts (40a, 40b) which are arranged at a radial angle of 90 degrees in relation to at least one of the radial ports (22, 24) of the slide valve (10).

6. Slide valve (10) according to Claim 5, **characterized in that** the axial duct parts (40a, 40b) have a circular-segment-shaped or sickle-shaped cross section at least in sections.

7. Slide valve (10) according to at least one of the preceding claims, **characterized in that** it is electromagnetically actuable, wherein the valve slide (20) is acted on axially at one side by an axially acting pressure spring (42) and at the other side by an electromagnetic force.

## Revendications

1. Distributeur à tiroir (10), en particulier pour une boîte de vitesses automatique d'un véhicule automobile, avec un carter (14) et avec un tiroir de distributeur (20) déplaçable axialement disposé dans un évidement de guidage (19) du carter (14), dans lequel le carter (14) comprend au moins un raccord d'entrée radial (22) et un raccord de sortie radial (24) axialement espacé de celui-ci et un raccord de travail frontal (26), dans lequel il se trouve à l'évidement de guidage (19) au moins une première ouverture de commande (28) reliée au raccord d'entrée (22) et une deuxième ouverture de commande (30) axialement espacée de celle-ci et reliée au raccord de sortie (30) et une troisième ouverture de commande (32) disposée axialement entre ces deux dernières et reliée au raccord de travail (26), dans lequel les premières et les deuxièmes ouvertures de commande (28, 30) peuvent coopérer hydrauliquement avec une première et une deuxième parties de commande (34, 36) sur le tiroir de distributeur (20), et dans lequel il se trouve dans le carter (14) un canal de raccordement (40) s'étendant localement de façon axiale, qui relie la troisième ouverture de commande (32) au raccord de travail (26), **caractérisé en ce que** le carter (14) comprend une douille de tiroir (18) fabriquée en métal, dans laquelle l'évidement de guidage (19) et les ouvertures de commande (28, 30, 32) sont formées et qui est enrobée de matière plastique, formant ainsi une partie (38) fabriquée en matière plastique, dans laquelle le canal de raccordement (40) est réalisé.

2. Distributeur à tiroir (10) selon la revendication 1, **caractérisé en ce que** le carter (14) comprend une partie d'enveloppe radialement extérieure (16), qui est pressée sur la partie fabriquée en matière plastique (38) et sur laquelle le raccord d'entrée (22), le raccord de sortie (24) et le raccord de travail (26) sont formés.

3. Distributeur à tiroir (10) selon la revendication 2, **caractérisé en ce que** la partie d'enveloppe (16) comprend au moins un tamis de filtre (17) associé à un raccord (22, 24, 26).

4. Distributeur à tiroir (10) selon au moins une des revendications précédentes, **caractérisé en ce que** le tiroir de distributeur (20) présente dans une région respective de la première et de la deuxième parties de commande côté tiroir (34, 36) un diamètre essentiellement égal.

5. Distributeur à tiroir (10) selon au moins une des revendications précédentes, **caractérisé en ce que** le canal de raccordement (40) comprend au moins deux canaux partiels s'étendant axialement (40a, 40b), qui sont disposés sous un angle radial de 90° par rapport à au moins un des raccords radiaux (22, 24) du distributeur à tiroir (10).

6. Distributeur à tiroir (10) selon la revendication 5, **caractérisé en ce que** les canaux partiels axiaux (40a, 40b) présentent au moins localement une section transversale sensiblement en forme de segment de cercle ou en forme de croissant.

7. Distributeur à tiroir (10) selon au moins une des revendications précédentes, **caractérisé en ce qu'**il peut être actionné par voie électromagnétique, dans lequel le tiroir de distributeur (20) peut être soumis axialement d'une part à un ressort de compression agissant axialement (42) et d'autre part à une force électromagnétique.
